# EUROPEAN PATENT APPLICATION

(11) **EP 4 841 214 A1**
(43) Date of publication of application: **18.11.2026**
(21) Application number: 25177053.3
(22) Date of filing: 16.05.2025
(51) Int. Cl.: G01C 21/34, G08G 1/00, B60W 40/06, G05D 3/00

(54) **AUTOMATED VEHICLE TRACK OPTIMIZATION FOR SOFT GROUND CONDITIONS**

(71) Applicant: Volvo Construction Equipment AB, 631 85 Eskilstuna (SE)
(72) Inventor: WILHELMSSON, Martin, 423 39 TORSLANDA (SE); HENDERSON, Leon, 438 92 HÄRRYDA (SE); THAI, Vi Cuong, 422 49 HISINGS BACKA (SE); LAINE, Leo, 414 84 GÖTEBORG (SE); KVIST, Roland, 360 42 BRAÅS (SE); HARJU, Roberth, 352 35 VÄXJÖ (SE)
(74) Representative: Kransell & Wennborg KB

(57) **Abstract**

Provided is a computer system (200) for route/track optimization for autonomous transport vehicles (110). Processing circuitry (210) is configured to obtain data indicative of previous tracks (*γₚᵣₑᵥ*) selected by vehicles driving along the route, and to use a route optimization algorithm to decide upon a next track (*γ_{cur}*) to be selected for completing the route. Objectives of the algorithm includes at least to minimize energy consumption, travel distance and travel time. A cost function used for the algorithm introduces a penalty based on a level of closeness of a candidate track to one or more of the previously driven tracks. The solution thus enables to avoid e.g. rutting by selecting tracks that are (slightly) different from previous tracks, while still attempting to optimize energy consumption, travel distance and travel time. A corresponding autonomous vehicle (110), fleet management system (260), vehicle fleet (250) and computer program product/storage medium are also provided.

## Description

### TECHNICAL FIELD

The disclosure relates generally to the field of automated vehicles, such as used for automated transport missions. In particular aspects, the disclosure relates to automated vehicle track optimization for soft ground conditions. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

One use-case for (fully) autonomous vehicles is to perform transport missions with little or no human intervention. Such vehicles may for example be operated on construction sites, in mines, in gravel pits, and similar, and may be subject to very different ground conditions. As one example, vehicles may be programmed to follow very specific transport routes, such that they more or less follow within their own tracks especially when performing repetitive missions such as hauling material between loading and offloading sites, and similar. If the ground is soft or muddy, such repeated driving within the same tracks may result in so-called rutting, e.g. depressions or grooves worn into a road or path by the travel of wheels thereon. With progressed rutting, the wheel tracks may become deeper and deeper, more slippery, and rougher, and vehicles may find it difficult to get sufficient traction, especially as deep tracks are prone to collecting water, mud and/or other more slippery substances over time. Repeated driving in the same tracks may also cause polishing of the surface leading to further reduced traction, cause pot holes and/or other undulations, increase road roughness and e.g. result in increased wear on the vehicle due to excessive vibrations caused by such ground disturbances.

For a vehicle operated by a human driver, the driver would use experience to avoid such a situation, by selecting each route slightly different from the previous one, in order to avoid rutting and to improve traction, and similar. For autonomous vehicles with no such human driver, how to avoid disturbances such as rutting may however be particularly challenging.

### SUMMARY

According to a first aspect of the disclosure, there is provided a computer system for route optimization for an autonomous road and/or off-road transport vehicle or machine. The computer system includes processing circuitry configured to obtain data indicative of one or more previous tracks selected by one or more vehicles and/or machines when previously driving along a same transport route. The processing circuitry is further configured to use a route optimization algorithm to decide upon a next track to be selected by a vehicle or machine for an upcoming or ongoing drive along the transport route. Objectives of the algorithm includes at least to minimize an expected energy consumption, to minimize an expected travel time, and to minimize an expected travel distance. At least one cost function used for the algorithm introduces a penalty based on a level of closeness of a candidate track to at least one of the one or more previous tracks. The first aspect of the disclosure may seek to solve the problem of how to avoid, or at least alleviate, the issues related with e.g. rutting caused by repeatedly driving in exactly the same tracks on softer ground. A technical benefit may include that the envisaged solution still allows to optimize for both cost efficiency, travel time and distance, while avoiding problems with e.g. rutting due to the added cost/penalty for selecting tracks same or similar to previous tracks. This without having to modify the overall algorithm used to control the motion of the vehicle with more than an additional cost/penalty term.

Optionally in some examples, including in at least one preferred example, the processing circuitry may be further configured to control a motion of the vehicle or machine to follow the decided-upon next track. A technical benefit may include that the vehicle is thus controlled in a way that avoids, or at least alleviates, the problem with e.g. rutting.

Optionally, in some examples, including in at least one preferred example, the at least one cost function may include a weighted sum of at least a first value or function of the energy consumption, a second value or function of the travel time, and a third value or function of the travel distance. A technical benefit may include that the solution to how to control the motion of the vehicle may thus be found by optimizing for all of these variables simultaneously, and without having to focus on e.g. only one or none of these variables while also attempting to avoid e.g. rutting.

Optionally, in some examples, including in at least one preferred example, the at least one cost function may include a term equal to, or a function of, a difference between i) a minimum allowed distance and ii) a calculated minimum distance between the candidate track and the at least one of the one or more previous tracks. A technical benefit may include that the minimum allowed distance may thus be specified to obtain a desired separation between subsequent tracks, as more penalty will be given to candidate tracks closer to already driven tracks than others.

Optionally, in some examples, including in at least one preferred example, the one or more previous tracks may be a predefined number of most recent previously selected tracks smaller than a total number of all previously selected tracks. A technical benefit may include that the processing circuitry may thus be caused to "forget" about tracks driven e.g. a long time ago, to allow the vehicle to revisit such tracks with the assumption that e.g. the tracks have had sufficient time to rest before another vehicle revisits them, and similar. Phrased differently, the processing circuitry may take into account that it may be worthwhile to reuse a previous track if e.g. sufficiently long time has passed, if the optimization algorithm and cost function suggests that revisiting the track would be a good choice in terms of e.g. cost efficiency, travel time and distance.

Optionally, in some examples, including in at least one preferred example, the at least one cost function may include a random component. A technical benefit may include that by adding a random component to the cost function, repeated driving in a same track may be avoided (or at least discouraged from) in a way that is easy to computationally implement.

Optionally, in some examples, including in at least one preferred example, a hard constraint of the route optimization algorithm may include for the candidate track to stay within one or more boundaries defining a drivable area for the transport route. The one or more boundaries may be indicative of for example outer boundaries of a road and/or of one or more objects on and/or along the transport route, such as at least one of buildings, potholes, and soft and/or slippery ground areas. A technical benefit may include that such constraints may be used to avoid driving the vehicles in or at areas already known to have poor ground conditions, and/or known to be difficult to drive in and/or dangerous to drive in. Phrased differently, such constraints may allow to combine already known properties of a geographical area with decision making performed by the processing circuitry, to arrive at a solution that optimizes for cost efficiency, driving time and distance, and that avoids e.g. rutting and respects the already known properties of the area, and that avoids the vehicle driving of the road, coming into contact with e.g. buildings, trees, rocks, etc., and similar.

Optionally, in some examples, including in at least one preferred example, the processing circuitry may be further configured to update the one or more boundaries in response to receiving an indication and/or request thereof from an external party. A technical benefit may include that e.g. the boundaries may be dynamically updated as e.g. potholes are repaired, as ground conditions improve, and similar, such that a track is allowed to be reused once the conditions for the track improves. An external party may for example be a transport planning central, a control tower, a manager overseeing the operation of the autonomous vehicles, and similar.

Optionally, in some examples, including in at least one preferred example, the processing circuitry may be further configured to update the one or more boundaries based on readings from one or more sensors of the vehicle or machine for which the track is decided. A technical benefit may include that the vehicle or machine can thus on its own dynamically update the boundaries, as it discovers that e.g. a previously avoided track has now become more suitable to revisit than before, and similar.

Optionally, in some examples, including in at least one preferred example, the processing circuitry may be further configured to obtain values indicative of accumulated wheel slip for one or more regions along the transport route. The at least one cost function may introduce a penalty for the candidate track passing trough a region for which the accumulated wheel slip exceeds an accumulated wheel slip threshold. A technical benefit may include that e.g. load and road/ground wear may thus be distributed more evenly within a geographical area, by avoiding driving in areas where high accumulated wheel slip indicates that the vehicle is likely to slip and cause further damage to the ground.

Optionally, in some examples, including in at least one preferred example, the accumulated wheel slip for the region may be obtained by adding together wheel slip as experienced in the region by the vehicle or machine having previously driven along the transport route. A technical benefit may include that the experience from one vehicle may thus be shared with another vehicle (or machine), and used as part of deciding how the other vehicle should select its tracks.

Optionally, in some examples, including in at least one preferred example, the processing circuitry may be further configured to obtain data indicative of prevailing or expected weather conditions and/or ground conditions along the transport route. The at least one cost function may include also one or more parameters pertinent to the weather conditions and/or ground conditions. A technical benefit may include that knowledge about e.g. ambient conditions may thus be factored into the problem of how to select tracks, to e.g. avoid tracks more sensitive to e.g. weather if it is known that weather will be worse, and similar.

Optionally, in some examples, including in at least one preferred example, the processing circuitry may be further configured to define the minimum allowed distance based on the weather conditions and/or ground conditions. A technical benefit may include that e.g. in bad weather conditions, the processing circuitry may not be allowed to select tracks closer to an already driven track, while better weather conditions may allow the processing circuitry to do so. Phrased differently, the envisaged solution does not require e.g. the track-to-track separation to be static, but may adapt the separation based on e.g. weather and/or ground conditions.

Optionally, in some examples, including in at least one preferred example, the processing circuitry may be further configured to determine that the minimum allowed distance increases with more than a predefined amount between two or more different time instances and, in response thereto, to call for track maintenance for the transport route. A technical benefit may include that the processing circuitry may thus determine that the tracks are in need of e.g. repair, and automatically call for maintenance, by e.g. sending a suitable message to an external party.

According to a second aspect, there is provided an autonomous transport vehicle or machine, including the computer system of the first aspect or any example thereof, for controlling a motion of the vehicle or machine in accordance with the selected track. The second aspect may seek to solve the problem of how to provide a vehicle/machine capable of avoiding e.g. rutting, with the same benefits as described already with reference to the first aspect.

According to a third aspect, there is provided a fleet management system for a fleet of autonomous transport vehicles and/or machines. The system includes the computer system of the first aspect (or any example thereof), configured for obtaining the data indicative of one or more previous tracks selected by the one or more other vehicles and/or machines when previously driving along the transport route, and for deciding upon the next track to be selected by, and for communicating the decided-upon track to, a vehicle or machine of the fleet. The third aspect may seek to solve the problem of how to provide a management solution for a fleet of autonomous vehicles/machines, capable of avoiding e.g. rutting and with the same benefits as already described herein with reference to e.g. the first aspect.

According to a fourth aspect, there is provided a fleet of autonomous transport vehicle or machines. The fleet includes a plurality of autonomous transport vehicles and/or machines, and the fleet management system of the third aspect. The fourth aspect may seek to solve the problem of how to provide a fleet of autonomous vehicles/machines capable of avoiding e.g. rutting, with the same benefits as already described herein with reference to e.g. the first aspect.

According to a fifth aspect, there is provided a (computer-implemented method) for route optimization for an autonomous road and/or off-road transport vehicle or machine. The method includes the various operations already described as performed by the computer system of the first aspect, with the same benefits provided thereby. The fifth aspect may seek to solve the problem of how to control a computer system to achieve the benefits described herein, such as to avoid rutting.

According to a sixth aspect, there is provided a computer program. The program includes program code (e.g., instructions) for performing, when executed by processing circuitry (such as that of the first aspect), the method of the fifth aspect. The sixth aspect may seek to solve the problem of how to provide instructions for a processing circuitry and computer system that causes the computer system to perform as envisaged herein, with the same benefits as already described.

According to a seventh aspect, there is provided a computer program product that includes the program code/instructions (e.g. the computer program).

According to an eight aspect, there is provided a computer-readable storage medium that includes the instructions/program code recited above. The seventh and eight aspects may seek to solve the problem of how to logistically distribute e.g. a computer program as envisaged herein. In some examples, the computer-readable storage medium may be non-transitory. In some examples, the computer program product may e.g. include the storage-medium of the seventh aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** schematically illustrates an example of a transport route as envisaged herein.
**FIG. 2A** schematically illustrates various examples of a computer system for route optimization, and a transport vehicle fleet, as envisaged herein.
**FIG. 2B** schematically illustrates an example of how the computer system may form part of the transport vehicle, as envisaged herein.
**FIG. 2C** schematically illustrates an example of how the computer system may form part of a vehicle fleet management system, as envisaged herein.
**FIG. 3** schematically illustrates a flowchart of various examples of a method (as carried out by the computer system) for route optimization as envisaged herein.
**FIGS. 4A****,** **4B****,** **4C****,** **4D** and **4E** schematically illustrate examples of how to optimize track/route selection as envisaged herein.
**FIGS. 4F** and **4G** schematically illustrate examples of how to define tracks, and closeness between two tracks, as envisaged herein.
**FIG. 5** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

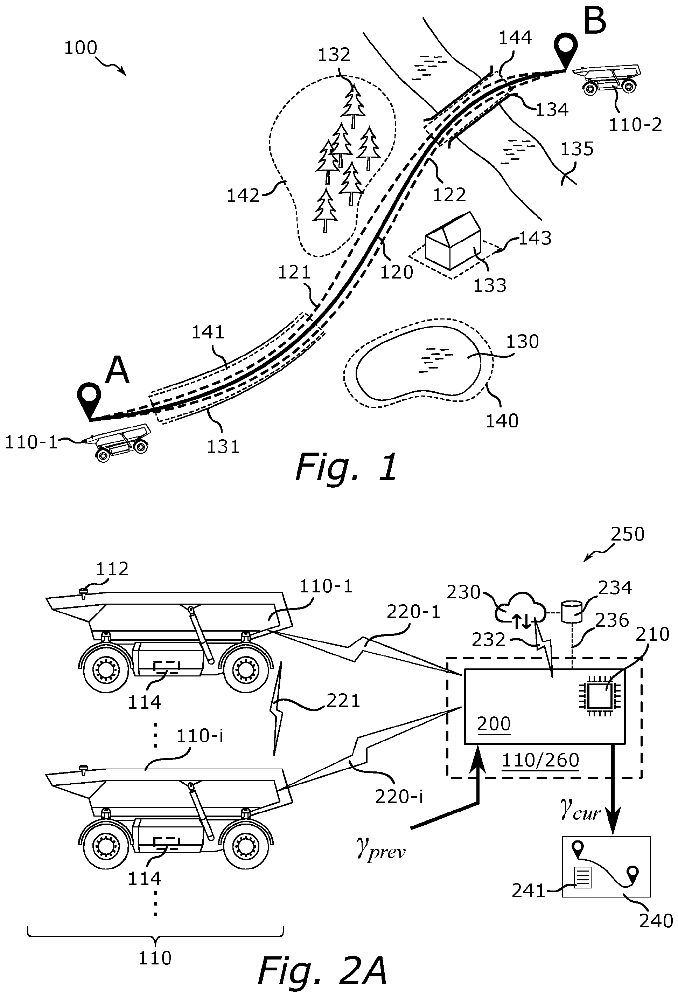

**FIG. 1** schematically illustrates an example of a transport route 100 for an autonomous road and/or off-road transport vehicle or machine according to the present disclosure. As envisaged herein, a "transport vehicle or machine" may be any vehicle suitable for transport of material, goods, people, livestock, and similar, and includes e.g. trucks, buses, dumpers, excavators, tractors, trailers, semitrailers, and similar. In what follows, the term "vehicle" or "transport vehicle" will be used as a common term for all such vehicles or machines/pieces of heavy machinery. As further envisaged herein, "autonomous" refers to any vehicle capable of driving without, or with a reduced among of, human input, such as without a driver or with a driver only present to intervene in case the driving situation escalates to a situation requiring intervention. For example, an autonomous vehicle may be equipped with one or more cameras and/or other sensors capable of providing data pertinent about the surroundings of the vehicle, including e.g. other vehicles or obstacles, terrain, ground conditions, and similar, and the vehicle may use suitable algorithms for using such surroundings data to make decisions about how to control a movement of the vehicle to complete a given task. In particular, the present disclosure and the solution envisaged herein concerns autonomous vehicles wherein a human driver/operator is not present to decide where to drive in order to avoid e.g. rutting, but where the vehicle (and/or a computer system managing the vehicle) is to figure this out on its own.

The example route 100 may form part of a transport mission, that in a general example includes at least for a vehicle to drive itself between two points A and B, as exemplified in FIG. 1, e.g. from the point A to the point B. To get from point A to B, there are many possible tracks that the vehicle may take. As envisaged herein, a "track" corresponds to a particular sequence of movements of the vehicle, resulting in a particular curve along which for example a center of gravity (COG) of the vehicle has moved. Exactly how the physical track marks resulting from such a curve will look like may of course depend on e.g. how many wheels (or other means for providing traction) the vehicle have, where each wheel is located relative to the COG, and similar. The physical track marks will of course correspond to contact points between each wheel and ground.

As envisaged herein, there is at least one autonomous vehicle 110-1 that is driving, or is about to drive, along the route 100, and at least one vehicle 110-2 that has previously completed the same route 100. As envisaged herein, "completing the same route" may not necessarily mean having driven in a same direction, and may e.g. include a vehicle having driven from point B to A instead of the other way around. Independent of whether a vehicle moves, or have moved, from A to B or from B to A, the vehicle is considered as driving, or having driven, *along* the route 100 between A and B. In some examples, the vehicles 110-1 and 110-2 may be different vehicles. In other examples, the vehicles 110-1 and 110-2 may be a same vehicle.

When planning how to drive along the route 100, different candidate tracks may be evaluated, and each such candidate track may, if selected, result in different characteristics such as energy consumption, travel time, travel distance, and similar, for completing the route 100. As envisaged herein, there may be an optimal track 120 that jointly minimizes the energy consumption required to complete the route 100, the travel time and travel distance, as well as one or more other, alternative tracks, such as 121 and 122 as shown in FIG. 1. As envisaged herein, energy consumption and travel distance and length may be jointly optimized, e.g. such that a resulting solution may not result from minimizing each quantity independently, but correspond to e.g. a solution wherein one quantity may not be further reduced without resulting in an increase in one or more of the other quantities, and similar (e.g., a Pareto optimum). As envisaged herein, "energy consumption" may for example be expressed as energy (e.g. in Joules [J], kilowatt hours [kWh]), or in any other suitable quantity from which energy may be derived, such as volume of fuel, financial cost, and similar. For what concerns the present disclosure, exactly how energy consumption is defined is not important. A "travel time" may for example be expressed in seconds, minutes, hours, days, or using any other suitable (time) unit. Likewise, "travel distance" may for example be expressed in meters, kilometers, feet, miles, or using any other suitable (length) unit.

In some examples, the geographical area wherein the route 100 is located may further include one or more obstacles and/or other limitations, providing restrictions on how a vehicle may select a track for completing the route 100. As envisaged herein, in some examples, such obstacles and/or other limitations may be defined by introducing various zones, in each of which the vehicle is either allowed or not allowed to travel. For example, there may be one or more areas of water 130 through which the vehicle may not drive, and one or more corresponding zones 140 may be defined into which the vehicle is not allowed to enter. As another example, there may be one or more sections of road 131 on which the vehicle is supposed to stay, and one or more corresponding zones 141 may be defined in which the vehicle must remain (to e.g. avoid driving into a ditch, or to end up in unprepared surfaces with insufficient surface friction, and similar). As another example, there may be one or more areas including e.g. trees 132 or other obstacles through which the vehicle cannot and/or should not drive, and one or more corresponding zones 142 may be defined into which the vehicle is not allowed to enter. As yet another example, there may be e.g. buildings 133 or other obstacles, to which the vehicle should keep a certain distance in order to avoid e.g. collisions or other danger, and one or more corresponding zones 143 may be defined into which the vehicle is not allowed to enter. As yet another example, there may e.g. be bridges 134 and similar, on which the vehicle must drive in order to avoid driving into e.g. water 135, canyons, ravines, or other areas not suitable for driving, and one or more corresponding zones 144 may be defined through which the vehicle must pass in order to complete the route 100. Other examples of obstacles and/or suitable zones are of course also possible, and the few examples given herein does not exclude other possibilities.

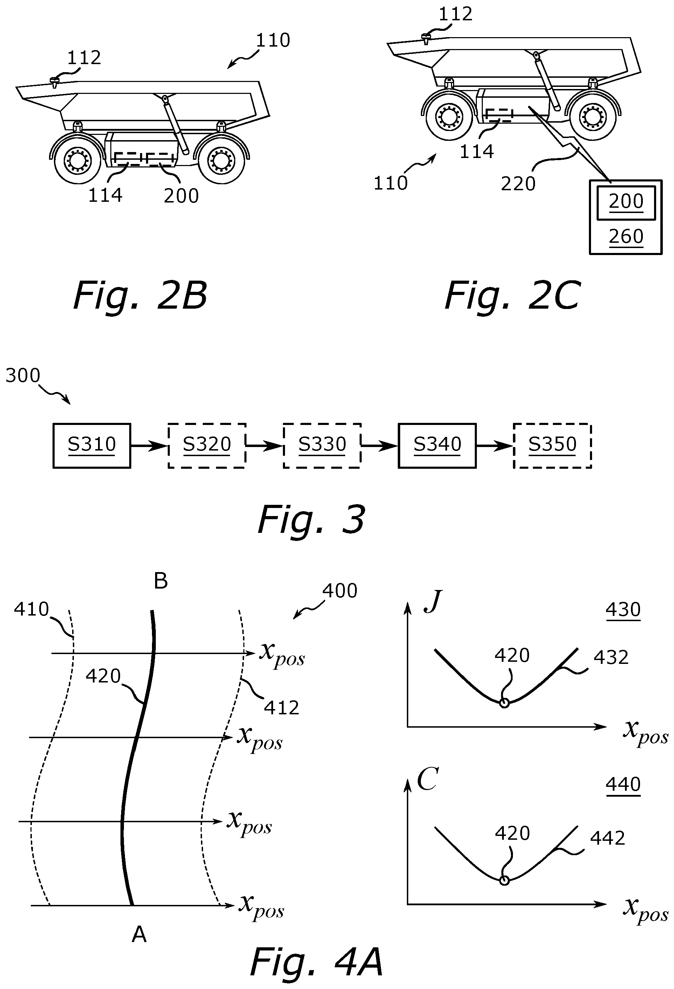

In particular, there are thus multiple possible ways of how to select a track for completing the route 100. As already discussed herein, there are also aspects related to e.g. rutting, wherein selecting a same track multiple times may result in destruction and/or unnecessary wear of the ground/road, and/or in unnecessary wear on the vehicle itself, and may cause the vehicle getting stuck, lose friction or, in a worser-case scenario, being involved in an accident due to the ground conditions in a particular track being too unsuitable for save driving of the vehicle. How the present disclosure aims at overcoming such issues will now be described in further detail with reference also first to FIGS. 2A, 2B, 2C and 3.

**FIG. 2A** schematically illustrates various examples of a computer system 200 for route optimization for an autonomous transport vehicle as envisaged herein, wherein the computer system 200 includes processing circuitry 210.

**FIG. 3** schematically illustrates a flowchart of a corresponding method for route optimization, as performed by the computer system 200 and processing circuitry 210 as part of such route optimization.

The processing circuitry 210 is configured to obtain, e.g. as part of an operation S310 of the method 300, data indicative of one or more previous tracks selected by one or more vehicles and/or machines when previously driving along a same transport route.

For example, the processing circuitry 210 and computer system 200 may be configured to communicate, e.g. wirelessly, with one or more vehicles 110-1, ..., 110-i, ..., collectively referred to as vehicles 110. The exact number of such vehicles is not important, as long as there is at least one such vehicle that has already driven a particular route for which track selection (i.e., route optimization) is required. The processing circuitry 210 and computer system 200 may for example be configured to communicate with vehicles 110 via respective data links 220-1, ..., 220-i, ..., preferably via wireless communication such as via cellular networks or other form of radio communication. Other examples include e.g. optical communication (via e.g. laser or infrared light), and similar. Exactly how the communication is performed is not important, as long as the processing circuitry 210 and computer system 200 may receive the data indicative of the one or more previous tracks from the one or more vehicles 110. In some examples, the vehicles 110 may be configured to communicate with each other, via one or more suitable data links 221. For example, the vehicles 110 may form a mesh of vehicles, such that a communication range may be extended. For example, the processing circuitry 210 and computer system 200 may not be able to communicate directly with one or more particular vehicles (due to terrain conditions, the vehicles being too far away, etc.), but may then instead communicate with one or more other vehicles of the vehicles 110, and these one or more other vehicles may relay information between the computer system 210 and computer system 200 and e.g. distant vehicles, or similar. In other examples, communication may not necessarily be directly between the computer system 200/processing circuitry 210 and vehicles 110, but may instead be performed via e.g. a cloud-based service 230 or other means of storage to which both the processing circuitry 210 and vehicles 110 have access. For example, vehicles 110 may upload data to the service 230 (using suitable data/communication links), and the processing circuitry 210 may access such data by itself communicating with the service 230 (via e.g. a wired or wireless link 232), or similar. Other examples may include the service 230 and computer system 200 both having access to a data storage 234, such that the service 230 and computer system 200 may exchange data via the storage 234, or similar. In other examples, the vehicles 110 may access the data storage 234 as well. More generally, as envisaged herein, the computer system 200/processing circuitry 210 and vehicles 110 may communicate either directly or indirectly, by any means possible, and it is not important exactly how such communication is performed.

For example, as part of operation S310, the processing circuitry 210 may obtain data indicative of one or more previous tracks in form of a set of tracks/curves *γ_{prey}* = {*γ*_{*prev,*1}, *γ*_{*prev,*2}, ...}, e.g. a set of one or more curves each defined by a plurality of points and line segments, and similar.

As envisaged herein, each vehicle 110 may for example be equipped with a positioning device 112 (implemented using e.g. global positioning technology, such as GPS, Gallileo, Beidou, Glonass, and similar), via which the vehicle knows its current position, and such that the vehicle can report what track it has previously driven to complete a transport mission. For example, a previous track *γ_{prev,i}* may include a set of coordinates *γ_{prev,i}* = {*x_{prev,i}*(*tₗ*), *y_{prev,i}*(*tₗ*)}, where *tₗ* is a time index and used to parametrize the previous curve/track *γ_{prev,i}.*

In some examples, vehicles 110 may further be equipped with one or more devices/sensors 114 configured to determine e.g. wheel slip, and the vehicles 110 may be configured to report, along with tracks *γₚᵣₑᵥ* also wheel slip. Example usage of also wheel slip as envisaged herein will be described in more detail later herein.

The processing circuitry 210 is further configured to use, as part of e.g. an operation S340 of the method 300, a route optimization algorithm to decide upon a next track/curve (e.g. *γ_{cur}*) to be selected by a vehicle or machine for an upcoming or ongoing drive along the transport route.

For example, the processing circuitry 210 may be configured to define a transport mission 240 along a particular route, and to provide instructions 241 indicating the selected track that the vehicle that is to perform the mission 240 is to drive along.

In particular, objectives of the algorithm include at least to (jointly) minimize an expected energy consumption, to minimize an expected travel time, and to minimize an expected travel distance, i.e. to jointly minimize *E*(*γ*)*, T*(*γ*) and *L*(*γ*). More in particular, a cost function (e.g. *C*(*γ*)) for the algorithm is defined such that it introduces a penalty based on a level of closeness of a candidate track to at least one of the one or more previous tracks *γₚᵣₑᵥ*, in order to prevent rutting by avoiding repeatedly driving in same or similar tracks, while still allowing to jointly minimize (as much as possible) energy consumption and travel distance and time.

FIG. 2A also serves to illustrate an envisaged vehicle fleet 250, and that the computer system 200 and processing circuitry 210 may form part of e.g. a vehicle fleet management system 260, and/or of a vehicle 110.

**FIG. 2B** schematically illustrates how, in some examples, the computer system 200 may form part of a vehicle 110 as envisaged herein. In such examples, the vehicle 100 may thus be configured to on its own determine how to optimize its ongoing or future route.

**FIG. 2C** schematically illustrates how instead, or in addition, the computer system 200 may in some examples form part of the vehicle fleet management system 260, that may communicate with the vehicle 110. In such examples, how to optimize the route for the vehicle 110 may be solved by the system 260, that may then communicate the result (i.e., the resulting track *γ_{cur}*) to the vehicle 110 via a suitable data/communication link 220. In yet other examples, the optimization may be performed jointly by both the vehicle 110 and the system 260, e.g. in a shared/distributed fashion, wherein the vehicle 110 may be responsible for solving e.g. a part of the problem, and the system 260 may be responsible for solving another part of the problem, and wherein information may be communicated between the vehicle 110 and system 260 such that in the end, the vehicle 110 is provided with information about the selected track *γ_{cur}.*

In some examples, the processing circuitry 210 may be further configured to control, as part of e.g. an operation S350 of the method 300, a motion of the vehicle 110 (or machine) to follow the decided-upon selected next track *γ_{cur}.* As envisaged herein, the vehicle 110 may be remotely controlled by e.g. the system 260, or be responsible for its own motion planning/control. In any case, the vehicle 110 is considered an "autonomous vehicle", as there is no human operator involved in order to decide which track to select to avoid e.g. rutting while simultaneously optimizing energy consumption and travel distance and time.

As envisaged herein, as one example, a track may generally be defined as a curve, e.g. as an image of an interval to a topological space by a (continuous) function. For example, a curve may be specified by a function *γ*: *I* → *X,* where *I* is an interval of e.g. real numbers and *X* is some topological space, such that the curve is the image of *γ*. A curve as envisaged herein may be closed (e.g., the points A and B shown in FIG. 1 may coincide) or open (e.g., the points A and B may be different points). A curve as envisaged herein may also be referred to as a path, if *I* = [*a, b*] is a closed and bounded interval, wherein *a* and b e.g. correspond to the end points of the curve, respectively, such as points A and B of FIG. 1.

As envisaged herein, for a candidate track defined by a curve *γ*, there may be defined the corresponding travel distance *L*(*γ*), travel time *T*(*γ*) and energy consumption *E(y).*

The length of a curve *γ*, i.e. *L*(*γ*), and thereby also of the corresponding track, may for example be defined as $L \left(γ\right) = {\int }_{a}^{b} \left|γ′\left(t\right)\right| dt ,$ where exactly how the curve is parametrized does not affect the length of the curve. More generally, if *X* is some metric space with metric *d,* the length of the curve *γ* (i.e. the travel distance) may be defined as $L \left(γ\right) = sup \left\{{\sum }_{i = 2}^{N} d \left(γ\left({t}_{i}\right),γ\left({t}_{i - i}\right)\right)\right\} ,$ where $n ∈ ℕ$ and *a = t*₁ < *t*₁ *<* ··· *< t_{N} = b.* For example, a curve may be defined by a line segments connecting a finite plurality of points *γ*(*tᵢ*) = {*xᵢ*, *yᵢ*}, where i ∈ (1, *N*), where *N* is the total number of points. With a metric such as $d \left(γ\left({t}_{i}\right),γ\left({t}_{i - 1}\right)\right) = \sqrt{{\left({x}_{i}-{x}_{i - 1}\right)}^{2} + {\left({y}_{i}-{y}_{i - 1}\right)}^{2}} = {d}_{i , i - 1} ,$ the length of the curve is thus the sum of the lengths of all line segments, e.g. such that $L \left(γ\right) = {\sum }_{i = 2}^{N} {d}_{i , i - 1} = {\sum }_{i = 2}^{N} \sqrt{{\left({x}_{i}-{x}_{i - 1}\right)}^{2} + {\left({y}_{i}-{y}_{i - 1}\right)}^{2}} .$ (1) Other definitions may of course also be used, as long as a length of the curve may be calculated or at least estimated somehow.

As envisaged herein, an estimated time required to move between points *γ*(*tᵢ*) and *γ*(*t*_{*i*-1}) may be given by a function *s*(*γ*(*tᵢ*), *y*(*t*_{*i*-1})) = *s*_{*i,i*-1}, and the time required to complete a track/curve (i.e., the travel time) may be defined as $T \left(γ\right) = {\sum }_{i = 2}^{N} \frac{{d}_{i , i - 1}}{{s}_{i , i - 1}} = {\sum }_{i = 2}^{N} \frac{d \left(γ\left({t}_{i}\right),γ\left({t}_{i - 1}\right)\right)}{s \left(γ\left({t}_{i}\right),γ\left({t}_{i - 1}\right)\right)} .$ The function s, indicative of how fast the vehicle can travel during each part of the curve, may of course depend on several factors, such as wind speed, wind attack angle, ground surface type, ground inclination, vehicle power, vehicle weight, aerodynamic properties of the vehicle (such as drag area coefficient), air viscosity and/or air temperature, and/or any other suitable factors, depending on the complexity of the model underlying the function s.

An estimated energy consumption for completing the curve section between *y*(*tᵢ*) and *γ*(*t*_{*i-*1}) may be provided by a function *e*(*γ*(*tᵢ*), *y*(*t*_{*i*-1})) = *e_{i,i-i}*, and the energy required for completing the whole curve/track *γ* (i.e., the energy consumption) may be defined as $E \left(γ\right) = {\sum }_{i = 2}^{N} {e}_{i , i - 1} = {\sum }_{i = 2}^{N} e \left(γ\left({t}_{i}\right),γ\left({t}_{i - 1}\right)\right) .$ The function e may for example also depend on the assumed speed *s*_{*i,i-*1}, e.g. such that *e*_{*i,i*-1} = *e*(*γ(tᵢ*), *γ*(*t*_{*i*-1}), *s_{i,i-i}*), and similar. The function e may for example take into account the speed of the vehicle, ground inclination, air drag, rolling friction, and/or any other terms suitable for estimating e.g. a required power for moving along the curve section with a particular speed, which may be translated into a required energy by knowledge of how efficient the vehicle's propulsion system is, and similar

As generally envisaged herein, it is not important exactly how each of *L*(*γ*), *T*(*γ*) and *E*(*γ*) are defined, and it is assumed that a skilled person would be able to provide such functionalities by studying contemporary scientific literature, from laboratory work, from established scientific principles, or a combination thereof.

As envisaged herein, as part of the route optimization, the processing circuitry 210 may be configured to solve an optimization problem, including e.g. to minimize a cost function *C*(*γ*), e.g. to solve a problem such as ${γ}_{cur} = {argmin}_{γ} C \left(γ\right) ,$ optionally subject to one or more constraints.

For example, the cost function may include a weighted sum of at least a first value or function of the energy consumption, a second value or function of the travel time, and a third value or function of the travel distance, e.g. such that *C*(*γ*) includes a term *w_{E}f_{E}*(*E*(*γ*)), a term *w_{T}f_{T}*(*T*(*γ*)) and a term *w_{L}f_{L}*(*T*(*γ*)), where *w_{E}, w_{T}* and *w_{L}* are respective weighting terms, and where *f_{E}, f_{T}* and *f_{L}* are respective functions. For example, the at least one cost function may be on the form $C \left(γ\right) = {w}_{E} E \left(γ\right) + {w}_{T} T \left(γ\right) + {w}_{L} L \left(γ\right) + ⋯ ,$ or similarly. Selection of the weighting coefficients may be performed depending on e.g. whether it is considered more important to minimize energy consumption over travel time and/or over travel distance, and vice versa.

In particular, as envisaged herein, the cost function *C*(*γ*) is also to include at least one term that depends on how close a candidate track *γ* comes to at least one of the one or more previous tracks *γₚᵣₑᵥ* = {*γ*_{*prev*,1}, *γ*_{*prev,*2}, ...}, e.g. the cost function *C*(*γ*) is to include an additional term *D*(*γ, γₚᵣₑᵥ*). For example, the cost function *C*(*γ*) may include an additional fourth value or function of *D,* e.g. an additional weighted, fourth term, *W_{D}f_{D}*(*D*(*γ,γₚᵣₑᵥ*)), where *w_{D}* is a corresponding weighting coefficient and *f_{D}* a corresponding function. For example, the cost function may be on the form $C \left(γ\right) = {w}_{E} E \left(γ\right) + {w}_{T} T \left(γ\right) + {w}_{L} L \left(γ\right) + {w}_{D} {f}_{D} \left(D\left(γ, {γ}_{prev}\right)\right) + \left(…\right) .$

For example, the function *D* may be formed based on a difference between i) a minimum allowed distance (such as *r*) and ii) a calculated minimum distance between the candidate track *γ* and the at least one of the one or more previous tracks *γₚᵣₑᵥ*. For example, the function *D* may be on the form $D \left(γ, {γ}_{prev}\right) = D \left(r-d\left(γ, {γ}_{prev}\right)\right) ,$ where *d*(*γ, γₚᵣₑᵥ*) is a minimum distance between the candidate track *γ* and any of the previous tracks *γₚᵣₑᵥ.* For example, the function *D* may be on the form $D \left(r-d\left(γ, {γ}_{prev}\right)\right) = max \left(0,r-d\left(γ, {γ}_{prev}\right)\right) ,$ or similar, to provide no additional cost for the candidate track *γ* as long as the latter is at least a distance *r* away from each of the previous track(s) *γₚᵣₑᵥ.* The function *d* may for example be on the form $d \left(γ, {γ}_{prev}\right) = min \left(δ\left(γ, {γ}_{prev , 1}\right),δ\left(γ, {γ}_{prev , 2}\right),…\right) ,$ where *δ*(*γ, γ_{prev,i}*) provides the distance (e.g. closeness, such as a minimal distance) between tracks *γ* and *γ_{prev,i}.*

As an additional example, the function *D* may also take into account an age of a previously selected track, and assign a higher penalty for coming closer to a more recently driven previous track, and less penalty for coming closer to a previous track driven a longer time ago, or similar. Phrased differently, the penalty term related to closeness between tracks may also depend on when the previous one or more tracks *γₚᵣₑᵥ* where recorded, and similar. In other examples, the function *D* may not make any difference between older and newer previous tracks.

How to select the weighting parameters *w_{E}, w_{L}*, *w_{T}* and *w_{D}*, and e.g. the minimum allowed distance r, may, as envisaged herein, depend on a desired optimization result, e.g. the weighting parameters are calibration parameters that may be tuned according to particular needs. For example, *r* may be selected to correspond to e.g. a few centimeter up to one or few meters, and similar.

In the above, the functions *f_{E}*(*E*(*γ*)), *f_{L}*(*L*(*γ*)) and *f_{T}*(*T*(*γ*)) have all been chosen such that *f*(*x*) *= x.* This may, however, not necessarily be the case, and one, some or all of these functions, including also *f_{D},* may instead be selected as, or to include, quadratic (e.g. *f*(*x*) = *x*²) or higher-order terms, which may sometimes be helpful for the optimization routine.

**In** some examples, as already mentioned above, one or more constraints may be imposed on the selected candidate track *γ*, e.g. such that $\begin{matrix}{γ}_{cur} = {argmin }_{γ} C \left(γ\right) , \\ s . t . W \left(γ\right) \leq 0 ,\end{matrix}$ (2) or similar, where *W*(*γ*) is e.g. a constraints matrix. The constraints may be hard or soft, or a combination of both.

For example, constraints may include one or more hard constraints, such that e.g. a requirement for the selected candidate track *γ* to be within one or more boundaries. For example, a set of one or more boundaries {Ω} = {Ω₁, Ω₂, ... } may be provided, and solving the optimization problem may require that for each boundary Ω*ⱼ* in {Ω}, a function *is Within*(*γ,* Ω*ⱼ*) is either true or false, depending on whether the boundary is such that the vehicle is to remain within the boundary or outside of the boundary. As envisaged herein, a boundary (or boundaries) may define a drivable area for the transport route and vehicle, and may be indicative of for example outer boundaries of a road and/or of one or more objects on and/or along the transport route, such as at least one of buildings, potholes, soft and/or slipper ground areas, and similar. Using FIG. 1 and the example route 100 as an example, a drivable area may be defined by the area including the one or more zones 141, the one or more zones 144, but excluding the one or more zones 140, 142 and 143, and similar.
optionally subject to one or more constraints. For example, if a boundary Ω₁ is an outer boundary of zone 140, a boundary Ω₂ is an outer boundary of zone 141, a boundary Ω₃ is an outer boundary of zone 142, a boundary Ω₄ is an outer boundary of zone 143, and a boundary Ω₅ is an outer boundary of zone 144, the constraints imposed on the problem (2) may require that *isWithin*(*γ,* Ω*ᵢ*) = *true* for *i* = 2, 5 and *isWithin*(*γ,* Ω*ᵢ*) = *false* for *i* = 1, 3, 4.
As envisaged herein, such boundaries may be imposed to make sure that the vehicle remains on a road and does not drive into e.g. a ditch, collides with a road-side object, drives out onto surfaces with known, low friction conditions, does not collide with known buildings, rocks, potholes, and similar, does not try to drive outside of bridges or other means of crossing e.g. water, does not collide with known locations of e.g. trees, bushes, fences, and similar, and/or to avoid other possible risks and ways of e.g. damaging the vehicle and/or its surroundings.

In some examples, the definitions of such boundaries may be dynamically updated as time evolves, and the processing circuitry 210 may for example be configured to receive an indication and/or a request (from e.g. an external party, such as a geographical area manager, transport mission planning central, transport coordinator, and similar) to update, as part of e.g. an optional operation S320 of the method 300, one or more of the boundaries used to constraint the optimization problem (2) in response to receiving such an indication/request. For example, a pothole may be fixed, and a boundary restricting the vehicle from visiting the area of where the pothole was may not longer be needed. Similarly, other potholes may form, and adding of a new boundary to avoid the vehicle driving into one or more new potholes may thus be required.

In other examples, the processing circuitry 210 may be configured to, using e.g. one or more sensors (such as 114) of the vehicle 110 and as part of e.g. the optional operation S320, dynamically update the one or more boundaries on its own, after e.g. detecting that there are one or more objects that may pose a danger if collided with in the vicinity of the vehicle, that parts of a road appears to be covered in ice, snow or are otherwise in poor conditions for driving, and similar. The vehicle/processing circuitry may then on its own add one or more boundaries in order to avoid selecting a track passing through such areas, and similar. Likewise, if detecting that e.g. a road surface condition is no longer too bad for the vehicle to enter a particular, already defined boundary, the vehicle 110 may determine to dynamically remove the already defined boundary, thus creating a more accurate picture of the actual, prevailing conditions where the vehicle is driving (or is supposed to drive). Examples of usable sensors may include cameras, lidars, lasers, radars or other range finders, combined with suitable algorithms for detecting obstacles based on readings from such sensors, and similar. If the processing circuitry 210 and computer system 200 are provided as part of the vehicle 110 itself, the vehicle 110 may directly use such sensor readings as part of selecting the track *γ_{cur}.* If the processing circuitry 210 and computer system 200 are instead provided as part of e.g. the vehicle fleet management system 260, the vehicle 110 may communicate the readings from the sensors to e.g. the system 260, and the system 260 may dynamically add/remove zones/boundaries as required.

In some examples, the at least one cost function *C*(*γ*) may further include one or more additional terms Q, or *Q*(*γ*), that may be values of, or functions of values of, one or more additional parameters, derived from and/or pertinent to e.g. prevailing or expected weather conditions and/or ground conditions along the transport route. For example, a term *Q*(*γ*) of the cost function *C*(*γ*) may provide a penalty if the track *λ* passes through an area wherein the known weather and/or ground conditions make it less suitable for the vehicle to travel, such as an area known to be icy, muddy, slippery, cold enough to cause e.g. icing, black icing, and similar. In such examples, selecting a track passing to such known, e.g. hazardous, areas can be punished, sufficiently to instead likely selecting a different track. Phrased differently, in addition to (jointly) optimizing for all of energy consumption, travel distance and time, as well as closeness to the one or more previously selected tracks, prevailing weather and/or ground conditions may also be taken into account, and used to avoid particularly unsuitable areas that would not be avoided if only considering the other terms.

As envisaged herein, in some examples, the prevailing weather and/or ground conditions may for example be used to dynamically update the minimal allowed distance r. For example, if the weather and/or ground conditions are poor, the distance r may be increased, and vice versa, such that the decision on which track to select are made based on accurate, current information instead of on older information that may no longer be relevant.

In particular examples, the present disclosure further envisages that one or more of the vehicles 110 are configured to estimate wheel/tire slip, such as longitudinal slip. For this purpose, one or more sensors such as 114 may be configured to measure e.g. longitudinal speed *vₓ,* wheel rotation speed *ω*, and to estimate longitudinal slip as for example $λ = \frac{Rω - {v}_{x}}{max \left(\left|{v}_{x}\right|, \left|Rω\right|, ϵ\right)} ,$ where R is wheel/tire radius, and where *ε* is parameter having a small value, such as e.g. 0.1, to avoid the denominator being zero in case there is no wheel rotation or longitudinal movement of the vehicle. Using this definition, *λ* = 1 may correspond to full positive slip, i.e. that the wheel is rotating without the vehicle moving forward (e.g. full spinning), while *λ* = -1 may correspond to full negative slip, i.e. that the vehicle is moving forward with the wheel locked/not rotating (e.g. full skidding). Other definitions of (longitudinal) wheel slip may of course also be used.

**In** these particular examples, it is further envisaged that the processing circuitry 210 may be configured to obtain, e.g. as part of an optional operation S330 of the method 300, values indicative of accumulated wheel slip for one or more regions along the transport route, and that the cost function *C*(*γ*) is further such that it provides a higher (of finite) penalty for a candidate track *γ* passing through one or more areas with higher accumulated wheel slip, and lower (or no) penalty for a candidate track *γ* passing through one or more areas with lower accumulated wheel slip. As one example, the cost function *C*(*γ*) may be such that it introduces a penalty if the accumulated wheel slip in one or more regions along the route exceeds an accumulated wheel slip threshold. The penalty may be fixed, or may depend on the level of accumulated wheel slip in the particular one or more areas.

For example, the cost function *C*(*γ*) may include at term *S*(*γ*, A = {Λ₁,Λ₂, ... }), where A is a set of regions and corresponding accumulated wheel slip data. For example, Λ*ⱼ* = {ρⱼ, *λ*_{*acc*,*j*}}, where *ρⱼ* defines a boundary of the *j*-th region and *λ_{acc,j}* the accumulated wheel slip in this region. For example, the term *S*(*γ*, A) may be on the form $S \left(γ, Λ\right) = {σ}_{{Λ}_{1}} \left(γ\right) + {σ}_{{Λ}_{2}} \left(γ\right) + ⋯ ,$ where *σ*_{Λ*ⱼ*}(*γ*) provides a fixed penalty, e.g. *σ_{fix}*, if *γ* passes through region *ρⱼ* and the accumulated wheel slip in this region is above a threshold, e.g. if *λ_{acc,j} > λₜₕᵣₑₛₕ*, and otherwise not. Other examples are of course also possible. For example, the term *S*(*γ*, A) may be on the form $S \left(γ, Λ\right) = max \left({σ}_{{Λ}_{1}}\left(γ\right),{σ}_{{Λ}_{2}}\left(γ\right),…\right) .$ In yet other examples, the function *σ*_{Λ*ⱼ*}(*γ*) may vary depending on e.g. the accumulated wheel slip in the area, e.g. such that *σ*_{Λ*ⱼ*}(*γ*) is proportional to *λ_{acc,j},* e.g. ${σ}_{{Λ}_{j}} \left(γ\right) ∝ {λ}_{acc , j}$ if *γ* passes through *ρⱼ* (and e.g. otherwise zero), or e.g. such that ${σ}_{{Λ}_{j}} \left(γ\right) ∝ max \left(0,{λ}_{acc , j}-{λ}_{thresh}\right)$ if *λ* passes through *ρⱼ* (and e.g. otherwise zero), or similar. Other ways of making the cost function *C*(*λ*) provide a penalty for attempting to visit a region with high(er) accumulated wheel slip are of course also possible.

For example, one or more vehicles may report estimated wheel slip values (for at least one wheel) *λⱼ*(*tᵢ*) for a region *ρⱼ*, and such values may be aggregated to form *λ_{acc.j}*. For example, *λ_{acc,j}* may be formed simply by summing all received values *λⱼ* over time, or by e.g. considering a time-moving average of for example the *K* most recently received such values, or similar. Using e.g. a time-moving average may have the advantage that values that are old, and that may not necessarily represent a current state in an area, are given less or no weight.

As envisaged herein, it is assumed that high accumulated wheel slip in an area indicates that there is high risk of e.g. slipping or causing excessive wear to the ground in the area, and by avoiding visiting such an area, the area may have time to rest, and/or damaging the area even further may be avoided. It may also be considered a safety enhancement not to visit such areas, based on the obtained knowledge that vehicles are more likely to slip in this area than in e.g. one or more other areas with lower reported accumulated wheel slip. By collecting wheel slip data from the vehicles, a map of wheel slip in a geographical area may be created, and used to decide where to select a track for completing a route more efficiently, in a way that avoids e.g. rutting, while still allowing to jointly optimize for energy consumption, travel distance and travel time as much as possible.

**FIG. 4A** schematically illustrates an example of the envisaged principle of how to optimize track selection as envisaged herein. At the left side of FIG. 4A is shown a first driving 400 along a route, in accordance with a first selected track 420. The route may e.g. be bounded by outer perimeters 410 and 412, such that the vehicle is required to stay within the perimeters 410 and 412 to avoid e.g. driving outside of a road, or similar. At the right side of FIG. 4A is shown a plot 430 illustrating how a first cost function *J*(*xₚₒₛ*) depends on a lateral offset *xₚₒₛ* from the left-most perimeter 410 along the route. The first cost function *J* may for example correspond to a combined penalty in terms of energy consumption, travel distance and travel time, but excludes any penalty related to closeness to other tracks. As can be seen from the plot 430, the selected track 420 corresponds to a (global) minimum of the function 432, i.e. the selected track 420 may be considered an optimal track in terms of energy consumption, travel distance and travel time. At the right side of FIG. 4A is also shown a plot 440, illustrating a cost function 442 corresponding to *C*(*λ*), i.e. the cost function 432 modified by adding thereto at least one term penalizing selecting a track too close to a previously selected track, e.g. the term *D*(*γ, γₚᵣₑᵥ*). For this particular example, each track is characterized in terms of its lateral offset *xₚₒₛ*, such that *C*(*λ*) → *C*(*xₚₒₛ*). As there is only one selected track available, there is no closeness-related penalty for selecting the track 420, and *C*(*xₚₒₛ*) thus equals *J*(*xₚₒₛ*). As can also be seen, selecting the track 420 is the outcome of finding the argument of *C*(*xₚₒₛ*) that corresponds to a minimum of function 442, i.e. ${x}_{{pos}_{420}} = {argmin }_{{x}_{pos}} C \left({x}_{pos}\right) ,$ where *x*_{*pos*₄₂₀} means the lateral offset of the track 420.

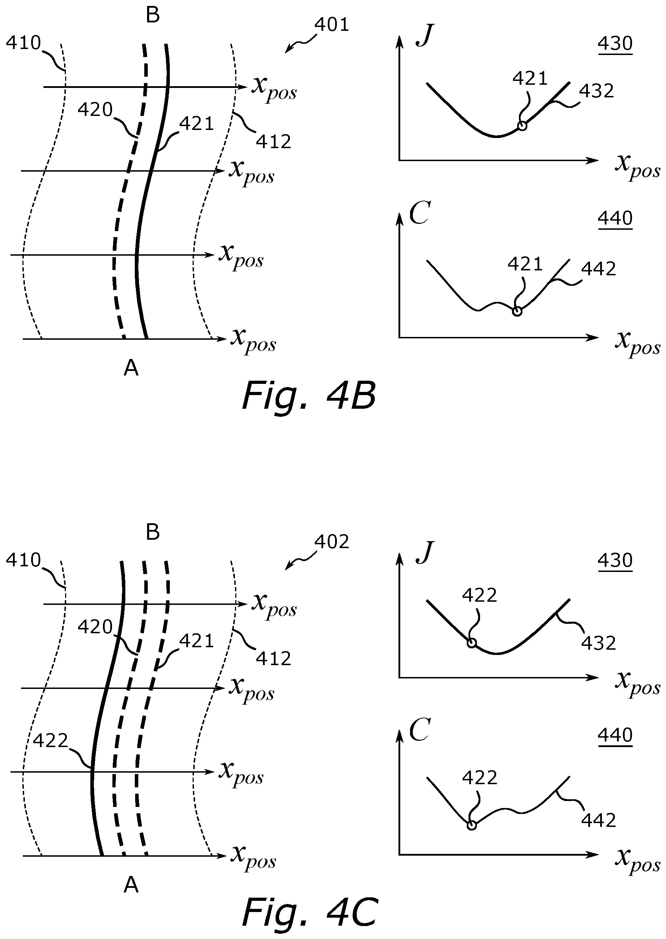

**FIG. 4B** schematically illustrates a next, second driving 401 along the route, wherein the vehicle (or some other vehicle) has already taken the track 420 at least once, and is about to determine how to select a next track 421 according to the solution envisaged herein. In this example, the track 420 thus correspond to a previously selected track, and the track 421 is the next track to be selected. As there is at least one previously selected track, the envisaged optimization problem will now include a penalty for selecting the track 421 too close to the previous track 420, as can be seen in the plot 440 of the function 442 (i.e., *C*(*xₚₒₛ*)). Phrased differently, in the function 442, there is now a non-zero term *D*(*γ, γₚᵣₑᵥ*), where *γₚᵣₑᵥ* includes track 420. As a result, the cost function 442 changes such that it now has two minima, which do not align with the previous (global) minimum of either function 432, 442 shown in FIG. 4A. Solving the optimization problem results in finding one such minimum, corresponding to the selected next track 421. It can be seen from plot 430 that the minima of the cost function 442 corresponding to track 421 does not correspond to a minimum of the function 432, but that the minimum is instead such that it jointly optimizes both energy consumption, travel distance, travel time while also avoids coming too close to the previously selected track 420, to avoid e.g. rutting.

**FIG. 4C** schematically illustrates a yet further, third driving 402 along the route, i.e. a further progression of the solution as envisaged herein for selecting a next track. In this situation, there are now two previously selected tracks 420, 421, and it is to be determined how to select a next track 422. In this situation, the cost function 442 includes two (local) minima, one corresponding to selecting the next track 422 to the right of previous track 421, and another one corresponding to selecting the next track 422 to the left of previous track 420. As the penalty provided by the function 432 increases with increasing lateral distance from the first selected track 420, the function 442 is such that the minimum corresponding to track 422 as shown in FIG. 4C is also a global minimum, such that the envisaged solution will select track 422 as shown in FIG. 4C as the next selected track. Once again, although track 422 does not correspond to a minimum of the function 432, it does correspond to a minimum of the function 442, taking into account also closeness to the previously selected tracks 420, 421.

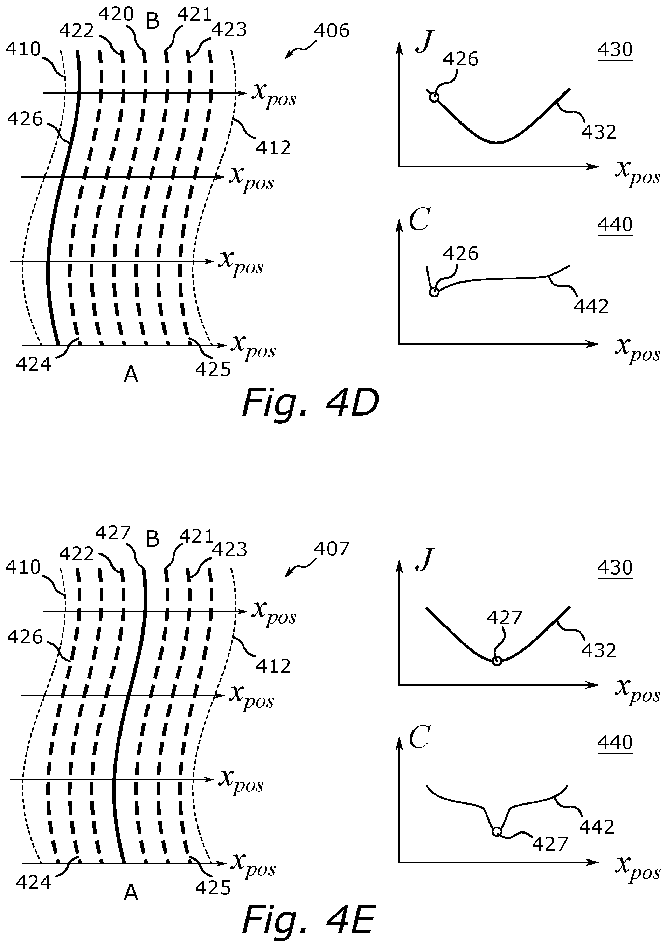

**FIG. 4D** schematically illustrates an example seventh driving 406 along the route, wherein there are now multiple previously selected tracks 420, 421, 422, 423, 424, 425, and wherein it is to be decided how to select a next track 426. Selecting the next track 426 to the right of previous track 425 or to the left of previous track 424 would, if not considering e.g. the perimeter 412, e.g. correspond to a same closeness-penalty. However, as a track selected to the right of track 425 would be further away from the "optimal" track 420 in terms of energy consumption, travel distance and travel time, as shown by the function 432, the cost function 442 has a global minimum corresponding to track 426 as shown in FIG. 4D, and is thus selected as the next track to be driven along. It may also be envisaged that the function 442 would include e.g. a term penalizing coming too close to, or going beyond, the perimeter 412, thus further forcing the solution of the optimization problem towards a track such as 426. In any case, it is yet again shown how to envisaged solution jointly optimizes energy consumption, travel distance and travel time, in combination with avoiding coming too close to one or more previous selected tracks.

**FIG. 4E** schematically illustrates an example eight driving 407 along the route, but also serves to illustrate how, in some examples as envisaged herein, the number of considered "one or more previously selected tracks" may not necessarily include all previously driven tracks, but instead only a finite number, such as a predefined number, of such previously selected tracks smaller than a total number of previously selected tracks. In this particular example, only the last six most recent and previously driven tracks are considered, e.g. only tracks 421-426, while previous track 420 are removed from the set *γₚᵣₑᵥ*. For example, as envisaged herein, the set *γₚᵣₑᵥ* may be defined to only include the *M* most recent previously selected tracks, and similar, where M is less than a total number of previously driven tracks. In yet other examples, *γₚᵣₑᵥ* may include e.g. only tracks recorded no later than a time *t*ₗᵢₘ from a current time instance, or similar, such that the number of tracks in *γₚᵣₑᵥ* may vary depending on how often vehicles drive along the route. With previous track 420 not part of *γₚᵣₑᵥ*, the function 442 has a global minimum corresponding to previous track 420, and track 427 is thus selected such that it is the same as 420. As mentioned before, and as seen in plot 430, track 427 thus corresponds to an optimal solution in terms of energy consumption, travel distance and travel time, that simultaneously minimizes the closeness-penalty regarding other, previously selected tracks. This may be advantages in that an optimal track in terms of energy consumption, travel distance and travel time may be selected more often, under the assumption that a track will heal itself as time passes, and similar.

It is to be noted that the examples provided in FIGS. 4A-4E are of course only provided to illustrate the underlying principle as envisaged herein, and may not necessarily correspond to realistic use-cases. The underlying principle does, however, apply, and FIGS. 4A-4E serve to illustrate how adding a term related to closeness to one or more previously selected tracks to a cost function of an optimization problem can help to avoid e.g. rutting while simultaneously attempting to minimize energy consumption, travel time and travel distance as much as possible. This in contrast to contemporary solutions including e.g. randomly selecting each track, or similar. In some examples, the envisaged solution may of course also include adding some form of randomness, e.g. by introducing an additional, random component into the cost function *C*(*λ*) such that the solution is not fully deterministic, or similar. Adding a random component may help to further reduce the risk of causing excessive ground and/or machine/vehicle damage due to e.g. rutting.

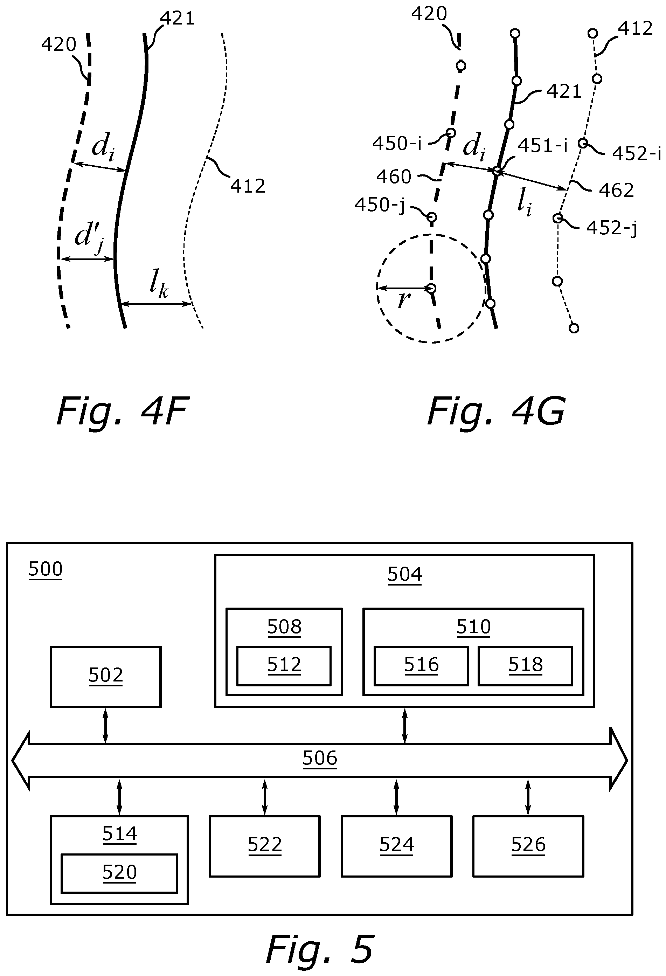

**FIG. 4F** schematically illustrates examples of how to define "closeness" between two tracks as envisaged herein. As an example, the closeness of a next track such as 421 vis-à-vis a previous track such as 420 may be defined in terms of e.g. a minimum distance *dᵢ* between the tracks, or e.g. in terms of a minimum lateral distance ${d}_{j}^{′}$ between the tracks, or similar. Likewise, a distance *lₖ* may be used to define how close the next track 421 is to a perimeter such as 412, or to any other boundary imposing a particular (hard or soft) constraint on the optimization problem as envisaged herein.

**FIG. 4G** schematically further illustrates how, as envisaged herein, a track may be defined as a collection of ordered geographical points (coordinates/vertices) and line segments connecting these points. For example, a track such as 420 may be defined by points 450-I, 450-j and interconnecting line segments 460, and similar for other tracks. The line segments may of course be defined implicitly by their respective end-points. For improved accuracy, the line segments may be replaced by e.g. splines interpolating between the points, or similar.

A minimum distance *dᵢ* between e.g. a particular point 451-i one track such as 421 and a particular point 450-I or line segment 460 of another track such as 420 may be calculated using already available methods. For example, the distance from point 451-i to line segment 460 may be defined as a distance from the point 451-i to a straight line passing through end-points 450-i and 450-j of the segment 460 when the projection of the point 451-i on this line falls inside of segment 460, and as a distance to the closest one of end-points 450-i and 450-j when the projection of the point 451-i outside of the segment 460, or similar. The distance from the point 451-i to all of the track 420 may be defined e.g. as the minimum of the distance's of the point 451-i to all segments of the track 420. Other examples of how to define a distance between the point 451-i and track 420 are of course also possible, such as if using lateral distances (e.g., distances in x-direction only) instead, or similar.

As envisaged herein, how close a track is to another track may for example be defined as the minimum distance from any point of the track to the other track, or similar. In other examples, the candidate tracks available for evaluation may e.g. be selected as being equal to an assumed optimal track, but shifted along a particular direction, such as horizontally, vertically, or along some other direction at an angle from both a horizontal and vertical direction, respectively. In such a case, the "closeness" of two tracks may be defined simply in terms of how far the tracks are shifted apart (such as illustrated by the parameter *xₚₒₛ* in FIGS. 4A-4D). Other examples are of course also envisaged as possible. A closeness of e.g. a track 421 to a boundary/perimeter 412 may be defined in a similar way, e.g. if the boundary/perimeter 412 is also defined as a series of (ordered) geographical points with line segments therein between, such as points 452-i, 452-j and line segments 462 shown in FIG. 4F. Other examples may include to define a circle around each point, and extend a radius of the circle until the circumference of the circle comes into contact with at least one point and/or segment of a line for which the closeness is to be evaluated, or similar. If any such circle has a radius smaller than r, the lines may be considered to be closer than the minimum allowed distance r, or similar. This may of course also be evaluated by considering when/if e.g. *dᵢ* is smaller than r for some distances, or similar.

As envisaged herein, a vehicle may store and report the explicit coordinates of a driven track, or e.g. store and report only a lateral offset of the track vis-à-vis some nominal, e.g. optimal, track.

As envisaged herein, a route may for example be a route repeatedly driven by autonomous vehicles such as haulers, or similar, in a mine, quarry, sand/gravel depot, or similar, to repeatedly transport material such as rock, stone, gravel, dirt, soil, etc., between e.g. loading and unloading sites, and similar. A route is however not limited only to such examples, and may correspond to any repeated driving, e.g. between two points, in a loop, or similar. As also envisaged herein, a "route" may not necessarily correspond to a full route between two distinct end-points, but may correspond to any part along such a full route. For example, if only considering how to select tracks along a particular part of a full route, the same solution still applies, and the part of the full route may be considered a "route" within the present disclosure.

In summary of the above, it is herein present a solution that allows to optimize track selection (considered part of "route optimization") in a way that allows to avoid e.g. rutting, but that allows to jointly optimize for energy consumption, travel distance and travel time, thereby leading to both increase safety, reduced wear on machines and/or ground, and increased efficiency in terms of time and cost. Avoiding e.g. rutting may further help to reduce e.g. the amount of dirt collected on the vehicle, with lower costs and resources required for regular maintenance and cleaning. To further highlight the advantages of the present disclosure and solution present herein, a contemporary solution may be defined as follows: An automated vehicle is repeatedly driving a same transport route. The vehicle uses a route optimization algorithm to find a most optimal route track in terms of energy consumption, travel distance and travel time, and then drives this track back and forth. Once/if the ground becomes e.g. soft, muddy and/or slippery, the vehicle will start digging into the ground as part of attempting to gain traction, causing further traction loss, rutting and excessive wear on both the ground and vehicle. Likewise, repeated driving over a same surface may result in "polishing" of the surface, further reducing the available friction, and lead to decreased safety and further wear. Eventually, the vehicle may get stuck somewhere along the track/route, slide of the drivable surface (e.g. into a ditch or into nearby objects), or may e.g. increase its energy consumption due to having to fight against bad ground conditions. The vehicle may also become dirty, i.e. due to reduced ground clearance due to rutting, and sensors and other objects of the vehicle may get clogged or destroyed, and the overall functionality and safety of the vehicle is compromised. In some cases, the vehicle may become stuck and required assistance to get moving again, such as from a tow truck or similar, or even get sufficiently damaged to require a trip to a workshop, all resulting in less productivity and increased operating costs. How the present disclosure envisages to solve this situation can be described as follows: Instead of just optimizing for energy consumption, travel distance and travel time once, the optimization problem is adjusted by adding a term to a cost function such that being too close to a previously selected track is penalized, thus forcing the processing circuitry responsible for the route optimization to select tracks that different at least slightly from those previously selected, while still remaining focus also on energy consumption, travel distance and travel time optimization. This is achieved by the vehicle saving previously driven tracks, and/or by obtaining such tracks from one or more other vehicles, and by taking these previously driven tracks into account as part of the additional term of the cost function. As has been shown herein already, the added penalty will result in the processing circuitry/vehicle choosing a (slightly) different path each time, and thus reduce the problem of e.g. digging into the ground and causing of rutting. In some examples, only a finite number of previously driven tracks are considered. In yet other examples, accumulated wheel slip in areas along the router are also considered, and the optimization problem is further adjusted such that penalty is provided also for visiting areas wherein the accumulated wheel slip is already high. The envisaged solution thus enables to distribute loading of ground/roads more evenly, and is also easy to implement as it mainly requires modification of software, and may rely on e.g. already available sensors such as for estimating position and optionally also wheel slip, and similar.

**FIG. 5** is a schematic diagram of a computer system 500 for implementing examples disclosed herein. The computer system 500 is adapted to execute instructions from a computer-readable medium to perform these and/or any of the functions or processing described herein. The computer system 500 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 500 may include processing circuitry 502 (e.g., processing circuitry including one or more processor devices or control units), a memory 504, and a system bus 506. The computer system 500 may include at least one computing device having the processing circuitry 502. The system bus 506 provides an interface for system components including, but not limited to, the memory 504 and the processing circuitry 502. The processing circuitry 502 may include any number of hardware components for conducting data or signal processing or for executing computer code stored in memory 504. The processing circuitry 502 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 502 may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processing circuitry 502 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with processing circuitry 502. A basic input/output system (BIOS) 512 may be stored in the non-volatile memory 508 and can include the basic routines that help to transfer information between elements within the computer system 500.

The computer system 500 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program 520 stored on a transitory or non-transitory computer-usable or computer-readable storage medium (e.g., single medium or multiple media), such as the storage device 514, which includes complex programming instructions (e.g., complex computer-readable program code) to cause the processing circuitry 502 to carry out actions described herein. Thus, the computer-readable program code of the computer program 520 can comprise software instructions for implementing the functionality of the examples described herein when executed by the processing circuitry 502. In some examples, the storage device 514 may be a computer program product (e.g., readable storage medium) storing the computer program 520 thereon, where at least a portion of a computer program 520 may be loadable (e.g., into a processor) for implementing the functionality of the examples described herein when executed by the processing circuitry 502. The processing circuitry 502 may serve as a controller or control system for the computer system 500 that is to implement the functionality described herein.

The computer system 500 may include an input device interface 522 configured to receive input and selections to be communicated to the computer system 500 when executing instructions, such as from a keyboard, mouse, touch-sensitive surface, etc. Such input devices may be connected to the processing circuitry 502 through the input device
interface 522 coupled to the system bus 506 but can be connected through other interfaces, such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may include a communications interface 526 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

The following is a non-exhaustive list of examples as envisaged herein:
Example 1: A computer system for route optimization for an autonomous road and/or off-road transport vehicle or machine, the computer system including processing circuitry configured to: obtain data indicative of one or more previous tracks selected by one or more vehicles and/or machines when previously driving along a same transport route; and use a route optimization algorithm to decide upon a next track to be selected by a vehicle or machine for an upcoming or ongoing drive along the transport route, wherein objectives of the algorithm include at least to minimize an expected energy consumption, to minimize an expected travel time and to minimize an expected travel distance, and wherein at least one cost function used for said algorithm introduces a penalty based on a level of closeness of a candidate track to at least one of the one or more previous tracks.
Example 2: The computer system of example 1, wherein the processing circuitry is further configured to control a motion of the vehicle or machine to follow the decided-upon next track.
Example 3: The computer system of example 1 or 2, wherein the at least one cost function includes a weighted sum of at least a first value or function of the energy consumption, a second value or function of the travel time, and a third value or function of the travel distance.
Example 4: The computer system of any one of examples 1 to 3, wherein the at least one cost function includes a term equal to, or a function of, a difference between i) a minimum allowed distance and ii) a calculated minimum distance between the candidate track and the at least one of the one or more previous tracks.
Example 5: The computer system of any one of the preceding examples, wherein the one or more previous tracks are a predefined number of most recent previously selected tracks smaller than a total number of all previously selected tracks.
Example 6: The computer system of any one of the preceding examples, wherein the at least one cost function includes a random component.
Example 7: The computer system of any one of the preceding examples, wherein a hard constraint of the route optimization algorithm includes for the candidate track to stay within one or more boundaries defining a drivable area for the transport route, said one or more boundaries being indicative of for example outer boundaries of a road and/or of one or more objects on and/or along the transport route, such as at least one of buildings, potholes, and soft and/or slippery ground areas.
Example 8: The computer system of example 7, wherein the processing circuitry is further configured to update the one or more boundaries in response to receiving an indication and/or request thereof from an external party.
Example 9: The computer system of example 7 or 8, wherein the processing circuitry is further configured to update the one or more boundaries based on readings from one or more sensors of the vehicle or machine for which the track is decided.
Example 10: The computer system of any one of the preceding examples, wherein the computer system is further configured to obtain values indicative of accumulated wheel slip for one or more regions along the transport route, wherein the at least one cost function introduces a penalty for the candidate track passing through a region for which the accumulated wheel slip exceeds an accumulated wheel slip threshold.
Example 11: The computer system of example 10, wherein the accumulated wheel slip for the region is obtained by adding together wheel slip as experienced in said region by the vehicles or machines having previously driven along the transport route.
Example 12: The computer system of any one of the preceding examples, wherein the processing circuitry is further configured to obtain data indicative of prevailing or expected weather conditions and/or ground conditions along the transport route, and wherein the at least one cost function depends also on one or more parameters pertinent to said weather conditions and/or ground conditions.
Example 13: The computer system of examples 4 and 12, wherein the processing circuitry is further configured to define the minimum allowed distance based on the weather conditions and/or ground conditions.
Example 14: The computer system of any one of the preceding examples, wherein the processing circuitry is further configured to determine that, between two or more different time instances, the minimum allowed distance increases with more than a predefined amount and, in response thereto, call for track maintenance for the transport route.
Example 15: An autonomous transport vehicle or machine, including the computer system of any one of examples 1 to 14 for controlling of a motion of the vehicle or machine in accordance with the selected track.
Example 16: A fleet management system for a fleet of autonomous transport vehicles and/or machines, including the computer system of any one of examples 1 to 14 configured for obtaining the data indicative of one or more previous tracks selected by one or more vehicles and/or machines when previously driving along the transport route, and for deciding upon the next track to be selected by, and for communicating the decided-upon track to, a vehicle or machine of the fleet.
Example 17: A fleet of autonomous transport vehicles or machines, including: a plurality of autonomous transport vehicles and/or machines, and the fleet management system of example 16.
Example 18: A computer-implemented method for route optimization for an autonomous road and/or off-road transport vehicle or machine, the method including: obtaining, by processing circuitry of a computer system, data indicative of one or more previous tracks selected by one or more vehicles and/or machines when previously driving along a same transport route; using, by the processing circuitry, a route optimization algorithm to decide upon a next track to be selected by a vehicle or machine for an upcoming or ongoing drive along the transport route, wherein objectives of the algorithm include at least to minimize an expected energy consumption, to minimize an expected travel time and to minimize an expected travel distance, and wherein at least one cost function used for said algorithm introduces a penalty based on a level of closeness of a candidate track to at least one of the one or more previous tracks.
Example 19: A computer program product including program code for performing, when executed by the processing circuitry, the method of example 18.
Example 20: A non-transitory computer-readable storage medium including instructions, which when executed by the processing circuitry, cause the processing circuitry to perform the method of example 18.

## Claims

1. A computer system (200, 500) for route optimization for an autonomous road and/or off-road transport vehicle or machine, the computer system comprising processing circuitry (210, 502) configured to:
- obtain data indicative of one or more previous tracks (*γₚᵣₑᵥ*) selected by one or more vehicles and/or machines (110) when previously driving along a same transport route (100), and
- use a route optimization algorithm to decide upon a next track (*γ_{cur}*) to be selected by a vehicle or machine for an upcoming or ongoing drive along the transport route, wherein objectives of the algorithm comprise at least to minimize an expected energy consumption, to minimize an expected travel time and to minimize an expected travel distance,
wherein at least one cost function used for said algorithm introduces a penalty based on a level of closeness of a candidate track to at least one of the one or more previous tracks.

2. The computer system of claim 1, wherein the processing circuitry is further configured to control a motion of the vehicle or machine to follow the decided-upon next track.

3. The computer system of claim 1 or 2, wherein the at least one cost function comprises a weighted sum of at least a first value or function of the energy consumption, a second value or function of the travel time, and a third value or function of the travel distance.

4. The computer system of any one of claims 1 to 3, wherein the at least one cost function comprises a term equal to, or a function of, a difference between i) a minimum allowed distance and ii) a calculated minimum distance between the candidate track and the at least one of the one or more previous tracks.

5. The computer system of any one of the preceding claims, wherein the one or more previous tracks are a predefined number of most recent previously selected tracks smaller than a total number of all previously selected tracks.

6. The computer system of any one of the preceding claims, wherein a hard constraint of the route optimization algorithm comprises for the candidate track to stay within one or more boundaries defining a drivable area for the transport route, said one or more boundaries being indicative of for example outer boundaries of a road and/or of one or more objects on and/or along the transport route, such as at least one of buildings, potholes, and soft and/or slippery ground areas.

7. The computer system of claim 6, wherein the processing circuitry is further configured to update the one or more boundaries in response to receiving an indication and/or request thereof from an external party, and/or based on readings from one or more sensors of the vehicle or machine for which the track is decided.

8. The computer system of any one of the preceding claims, wherein the computer system is further configured to obtain values indicative of accumulated wheel slip for one or more regions along the transport route, wherein the at least one cost function introduces a penalty for the candidate track passing through a region for which the accumulated wheel slip exceeds an accumulated wheel slip threshold.

9. The computer system of any one of the preceding claims, wherein the processing circuitry is further configured to obtain data indicative of prevailing or expected weather conditions and/or ground conditions along the transport route, and wherein the at least one cost function depends also on one or more parameters pertinent to said weather conditions and/or ground conditions.

10. The computer system of claims 4 and 9, wherein the processing circuitry is further configured to define the minimum allowed distance based on the weather conditions and/or ground conditions.

11. An autonomous transport vehicle or machine (110), comprising the computer system (200, 500) of any one of claims 1 to 10 for controlling of a motion of the vehicle or machine in accordance with the selected track (*γ_{cur}*).

12. A fleet management system (260) for a fleet (250) of autonomous transport vehicles and/or machines (110), comprising the computer system (200, 500) of any one of claims 1 to 10 configured for obtaining the data indicative of one or more previous tracks (*γₚᵣₑᵥ*) selected by one or more vehicles and/or machines when previously driving along the transport route, and for deciding upon the next track (*γ_{cur}*) to be selected by, and for communicating the decided-upon track to, a vehicle or machine of the fleet.

13. A computer-implemented method (300) for route optimization for an autonomous road and/or off-road transport vehicle or machine, the method comprising:
- obtaining (S310), by processing circuitry of a computer system, data indicative of one or more previous tracks selected by one or more vehicles and/or machines when previously driving along a same transport route, and
- using (S340), by the processing circuitry, a route optimization algorithm to decide upon a next track to be selected by a vehicle or machine for an upcoming or ongoing drive along the transport route,
wherein objectives of the algorithm comprise at least to minimize an expected energy consumption, to minimize an expected travel time and to minimize an expected travel distance, and wherein at least one cost function used for said algorithm introduces a penalty based on a level of closeness of a candidate track to at least one of the one or more previous tracks.

14. A computer program product comprising program code for performing, when executed by the processing circuitry, the method of claim 13.

15. A non-transitory computer-readable storage medium comprising instructions, which when executed by the processing circuitry, cause the processing circuitry to perform the method of claim 13.
